# EUROPEAN PATENT APPLICATION

(11) **EP 2 641 758 A1**
(43) Date of publication of application: **25.09.2013**
(21) Application number: 13160694.9
(22) Date of filing: 22.03.2013
(51) Int. Cl.: B60D 1/06, B60D 1/46, B60D 1/58, B60R 9/06, B65F 1/14, B60D 1/00

(54) **Towing bracket lift, assembly and method therefor**

(30) Priority: 23.03.2012 NL 2008528
(71) Applicant: Nicolai, Waatze Willem, 9289 HJ Drogeham (NL)
(72) Inventor: Nicolai, Waatze Willem, 9289 HJ Drogeham (NL)
(74) Representative: Verdijck, Gerardus

(57) **Abstract**

The invention relates to a towing hook lift (2) for lifting a mobile container (18)comprising at least one wheel axle (20), an assembly of a towing hook lift (2) and a method therefor. The towing hook lift (2) comprises a frame provided with a first coupling means (4) for coupling the frame to the towing hook (6) of a vehicle (8); and a lifting device connected to the frame, wherein the lifting device comprises a lifting means which is movable between a lowest position and a highest position and is provided with an engaging means (16) for engaging the wheel axle (20) of the mobile container (18) for the purpose of lifting the container.

## Description

The invention relates to a lift for lifting a mobile container.

Mobile containers known in practice are generally used to collect waste. When the container is full, the content has to be taken to a refuse dump. The waste is in many cases collected on a periodic basis by a refuse collection truck specially intended for this purpose, wherein the mobile container has to be placed at the roadside by the user so that the refuse collection truck can take away the waste.

The problem arises in practice however of the user having to displace the container over a great distance in order to place it at the roadside. This is a particular problem in rural areas. This problem also occurs frequently in the case of a private road. A container with heavy contents can moreover represent a problem even when being displaced over a short distance. In addition, it is usually difficult for the elderly and disabled to displace a container on their own. Further problems occur if the mobile container has to be taken to a higher location, this requiring additional physical effort. This is also the case if waste has to be removed by a user him/herself, for instance to a landfill site.

An object of the invention is to obviate or in any case reduce the above stated problems and to provide a device for simple displacement of a mobile container.

This problem is solved by the towing hook lift according to the invention for lifting a mobile container comprising at least one wheel axle, the towing hook lift comprising:
- a frame provided with a first coupling means for coupling the frame to the towing hook of a vehicle; and
- a lifting device connected to the frame,
wherein the lifting device comprises a lifting means which is movable from a lowest position to a highest position and is provided with an engaging means for engaging the wheel axle of the mobile container for the purpose of lifting the container.

Because the towing hook lift according to the invention comprises a lifting means with an engaging means which engages the at least one wheel axle of a container, the towing hook lift is universally applicable. The towing hook lift according to the invention can hereby be applied irrespective of the type of mobile container.

Because the towing hook lift can be coupled to a vehicle, users can use their own vehicle to displace the mobile container. A user couples the towing hook lift according to the invention to his/her vehicle using the first coupling means and then drives to the container for displacing. The user then lifts the container by its wheel axle by means of the lifting device. After being lifted, the container no longer makes contact with the ground. This has the advantage that the speed of the vehicle is not limited by a container being towed along behind the vehicle. Since the wheels of a mobile container are not configured for high speeds, there is a great chance of damage if a mobile container is pulled by a vehicle. There is moreover a great danger in this case of the container tipping over, for instance due to bumps in the road. The towing hook lift according to the invention prevents these drawbacks.

An additional advantage of the towing hook lift according to the invention is that it takes up less space than a trailer. If a user has nowhere to store a trailer, the towing hook lift according to the invention provides a solution. With the invention it is also possible for these users to displace mobile containers with their vehicle. It is also noted here that, in addition to waste containers, other mobile containers can also be displaced with the towing hook lift according to the invention.

The lifting means for instance comprises a lift fork.

In a currently preferred embodiment the frame with the first coupling means comprises a frame as known from cycle carriers. Simple production is hereby realized, since use can be made of a frame of a cycle carrier.

The engaging means preferably comprises an elongate element for placing under the axle, a hook extending round the wheel axle, a clamp or a magnetic coupling.

In a currently preferred embodiment the lifting means is movable by means of a winch. This can be a manual winch or an electric winch. In the case of an electric winch the towing hook lift according to the invention preferably comprises electrical coupling means for coupling the electric winch to the power supply of the vehicle. This is for instance the socket of a car as is usual for coupling of trailers.

In another preferred embodiment according to the invention the towing hook lift comprises a pulley over which runs a cable which is attached at its outer end to the lifting means. The lifting means is movable between the lowest and highest position by pulling on the cable. The frame preferably comprises at least one cable attachment point for releasably attaching the cable to the frame. The lifting means is held in a determined position by attaching the cable to the frame. The free outer end of the cable, i.e. the outer end not attached to the lifting means, for instance comprises for this purpose a first coupling part which can be coupled to a second coupling part of the frame co-acting therewith. The first and second coupling parts comprise for instance a hook and a ring into which the hook can be hooked.

In another embodiment the free outer end of the cable is connected to an elongate handle which is mountable in a holder on the frame. The holder comprises for instance a resilient element such that the handle can be snapped into the holder.

In a preferred embodiment according to the invention the lifting device comprises a second coupling means for coupling an upper part of the mobile container to the lifting device, wherein the second coupling means is movable such that the movement of the second coupling means is related to the movement of the lifting means.

With the second coupling means a second coupling to the lifting means is realized in addition to the engaging point of the lift fork at the wheel axle. A firm coupling of the container to the lifting device is hereby achieved. This prevents the container being able to move or, in the worst case, uncoupling from the towing hook lift during displacement using the towing hook lift.

The second coupling means preferably engages on a handgrip or a cover of the mobile container.

In a further preferred embodiment according to the invention the second coupling means comprises a resilient element.

Providing a resilient element simplifies the coupling of the mobile container to the lifting device. A user need only move the container against the second coupling means, which will, owing to the resilient element, automatically couple to the upper part of the container. The resilient element moreover holds the second coupling means under a predetermined spring tension, whereby a firm attachment of the container to the towing hook lift is realized.

The second coupling means comprises for instance a hook or clamp.

In a further preferred embodiment according to the invention the second coupling means is configured to engage on a pivot shaft of a cover provided on the upper side of the container.

Most types of rolling container are provided with such a cover shaft, which usually also serves as handgrip. Configuring the second coupling means such that it engages on the pivot shaft of the cover makes it possible to apply the invention to almost all types of container.

In a further preferred embodiment the lifting means comprises an adjusting mechanism for adjusting the width of the lifting means in the direction parallel to the wheel axle.

Different containers will generally have different wheel axle lengths. Providing an adjusting mechanism makes it possible to adapt the lifting means to the length and embodiment of the wheel axle. The towing hook lift according to the invention is hereby applicable with different types of container.

The lifting means preferably comprises a first and a second fork element located at a mutual distance adjustable by the adjusting mechanism. This achieves that the lift fork can be applied with containers with different lengths and embodiments of wheel axle. The lifting means is preferably embodied as a fork carrier.

In a further preferred embodiment the lifting means is length-adjustable.

This feature also contributes toward the universal utility of the towing hook lift according to the invention. Because the lifting means is length-adjustable, it can be applied with different containers having different embodiments of wheel axle. An additional advantage is that the lifting means can be extended in the direction of the container so that the lifting means can move under the wheel axle of the container, even if it is placed a certain distance from the lifting device.

The lifting means is for instance telescopically retractable and extendable.

The towing hook lift according to the invention preferably comprises a tilting mechanism.

Providing a tilting mechanism makes it possible to not only displace the container using the towing hook lift but moreover to empty it using the towing hook lift. This saves physical effort on the part of the user.

The lifting device for instance comprises the tilting mechanism. The lifting device is for instance configured to move the container upward, wherein an upper part of the mobile container is (un)coupled so that the container can tilt around its wheel axle. A container is for instance emptied into a silo during use. The container is hoisted for this purpose to a position above the upper opening of the silo using the towing hook lift. The container is then tilted around its wheel axle so that the content of the container slides into the silo. The underside of the container is lifted upward here so that the container is completely emptied.

In a preferred embodiment the lifting device comprises a vertical screw spindle which is rotatable, for instance by means of a mechanical or electrical drive, and the lifting means comprises an opening which is provided with screw thread and through which opening the vertical screw spindle runs such that rotation of the vertical screw spindle displaces the lifting means along the vertical screw spindle.

An exceptionally compact and effective lifting device is hereby obtained.

In a preferred embodiment the frame is provided with a handgrip for the purpose of carrying the towing hook lift.

Providing a handgrip, for instance a steel carrying bracket, makes the device easy to displace. The device can moreover be lifted in simple manner for placing on the towing hook of the vehicle.

The invention also relates to an assembly comprising a towing hook lift as described above and a platform and/or cycle carrier part which can be coupled to the lifting means.

The assembly according to the invention has the same advantages and effects as described above for the towing hook lift. Additional functionality is also obtained with the platform and/or the cycle carrier part which can be coupled to the lifting means. Using the platform other objects can also be transported with the towing hook lift according to the invention. Using the cycle carrier part a cycle carrier with lifting functionality is obtained when coupled, so that the towing hook lift can also be utilized in the transport of cycles.

The invention also relates to an assembly comprising a towing hook lift as described above and a vehicle registration plate holder for attaching to the container.

The assembly according to the invention has the same advantages and effects as described above for the towing hook lift according to the invention. Due to the provision of a vehicle registration plate holder, the container can be provided with a registration plate. It is hereby possible to use the towing hook lift to displace a container on the public highway, where a number plate is mandatory. The registration plate holder comprises for instance an adhesive for attachment to the container. It is hereby possible to dispense with holes in the container for attachment of the registration plate holder. The registration plate holder is preferably embodied as a sticker with preprinted number plate. The user simply adheres the sticker to the container so that the number plate is visible when the container is being transported using a vehicle provided with a towing hook lift according to the invention. An additional advantage of the registration plate holder on the container is that the container will be quickly identifiable by owners, for instance when it is located at a collection point among multiple containers.

The invention also relates to an assembly comprising a towing hook lift as described above and a coupling piece which can be coupled to the towing hook of a vehicle, wherein the first coupling means of the frame of the towing hook lift can be coupled to the coupling piece for the purpose of coupling the frame of the towing hook lift via the coupling piece to the towing hook.

This assembly according to the invention has the same advantages and effects as described above for the towing hook lift according to the invention.

A further advantage of an additional coupling piece is that the coupling piece can remain fixed to the vehicle, wherein the towing hook lift is coupled to or uncoupled from the coupling piece as desired. The coupling piece moreover makes it possible to couple other devices, such as a cycle carrier, to the towing hook. In short, different modules, such as a cycle carrier or the towing hook lift according to the invention, can be coupled to the coupling piece. The coupling piece can for instance be coupled to the towing hook in a manner as known for cycle carriers.

The coupling piece can for instance be coupled to the towing hook by means of a housing fitting over the towing hook, wherein the housing is held on the towing hook by a locking mechanism. The locking mechanism comprises for instance a locking pin. The locking mechanism can for instance be operated by means of a handle on the coupling piece.

The invention also relates to a method for lifting a mobile container comprising at least one wheel axle, the method comprising of providing a towing hook lift as described above.

The method according to the invention has the same advantages and effects as described above for the towing hook lift according to the invention.

Further advantages, features and details of the invention are elucidated on the basis of preferred embodiments thereof, wherein reference is made to the accompanying figures:
- figures 1-2 show a first embodiment of a towing hook lift according to the invention, respectively before and during lifting of a container;
- figure 3 shows an alternative embodiment of the towing hook lift according to the invention;
- figure 4 shows a detail of the embodiment of figure 3; and
- figure 5 shows a schematic front view of the towing hook lift of figures 1-2 or figures 3-4.

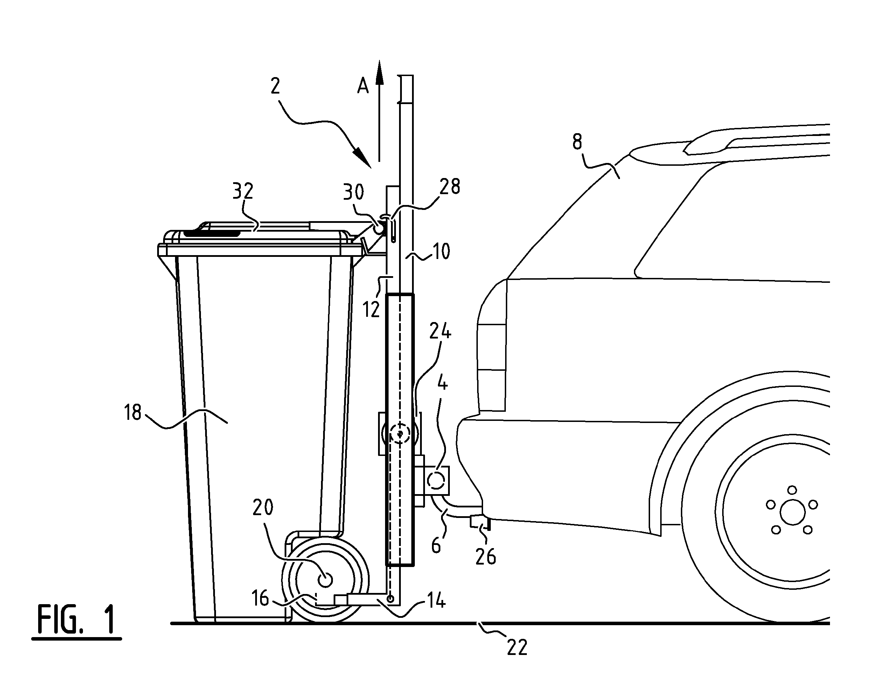

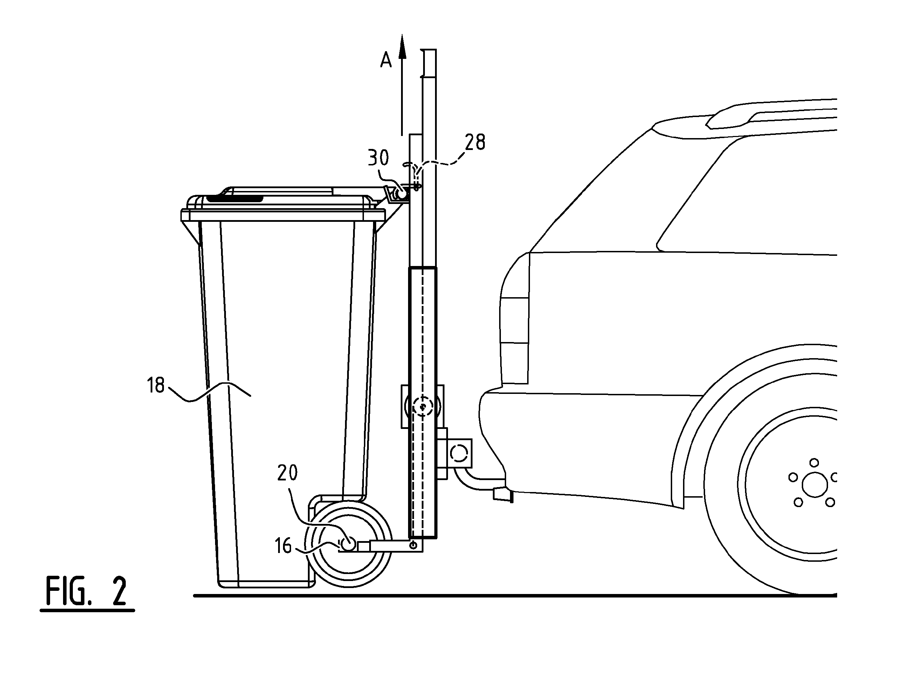

Towing hook lift 2 (figures 1, 2) is coupled by means of coupling 4 to towing hook 6 of car 8. Towing hook lift 2 comprises a first frame 10 along which a second frame 12 is vertically movable. Second frame 12 is provided at its lower outer end with a lift fork 14. This lift fork 14 comprises a hook part 16 on its outer end.

In order to lift mobile container 18 using towing hook lift 2, the user drives car 8 in the direction of the container, as shown in figure 1. The user then operates the lifting device so that hook 16 of lift fork 14 engages round wheel axle 20 of container 18 (figure 2). By moving second frame 12 upward as according to arrow A container 18 moves clear of the ground 22. In the shown embodiment second frame 12 is moved by means of electric winch 24. Electric winch 24 is for instance connected to socket 26 of car 8 for its power supply. This coupling is not shown in the figures.

Situated on the upper side of second frame 12 is a hook 28 which can be placed round rotation shaft 30 of cover 32 of container 18. Figure 2 shows two positions of hook 28. When hook 28 engages round shaft 30, container 18 is secured by lift fork 14 and hook 28.

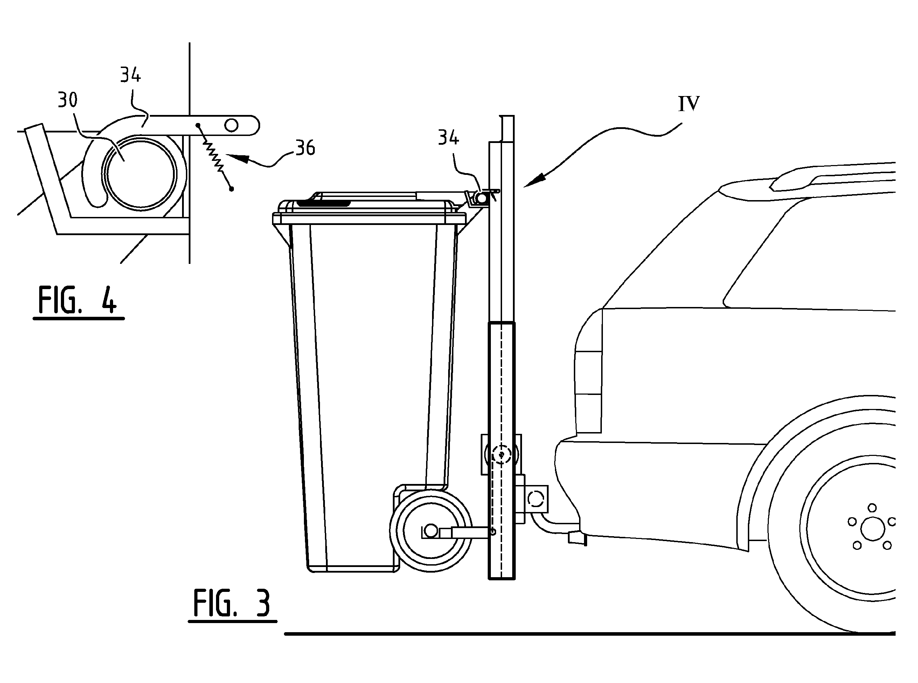

In an alternative embodiment (figures 3, 4) hook part 34 is provided with a spring 36. Hook part 34 hereby presses with a predetermined force on rotation shaft 30 of cover 32 so that container 18 is held in place.

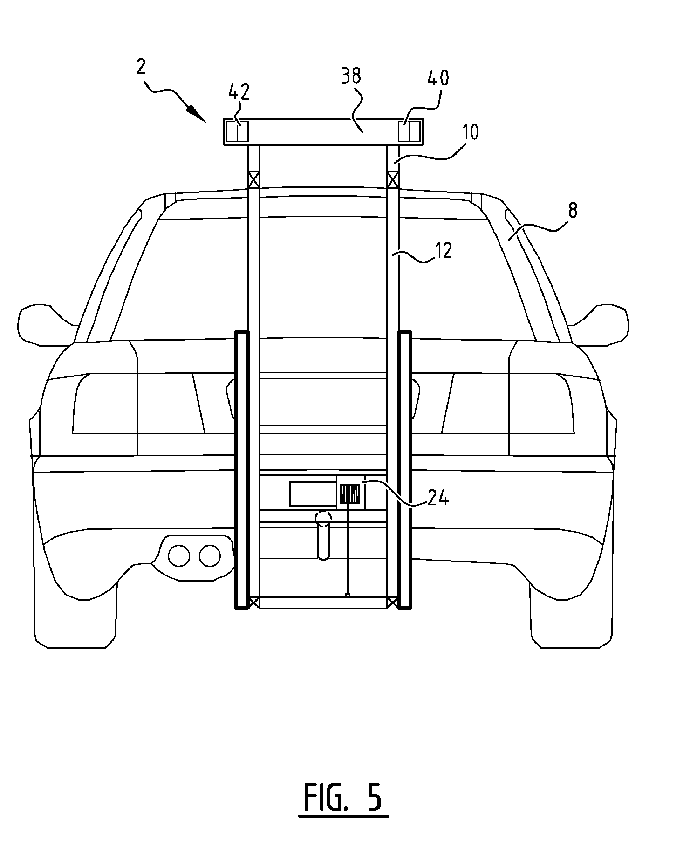

Figure 5 shows a front view of a towing hook lift 2 according to the invention. Clearly visible in this view is an element 38 for attaching of a number plate, i.e. a vehicle registration plate. Element 38 comprises lights 40, 42 and is mounted on the upper side of first frame 10.

In order to lift a container, a user places towing hook lift 2 on towing hook 6 of his/her car 8. Coupling 4 is fixed here so that towing hook lift 2 is firmly attached to car 8. The user then drives his/her car 8 to a position close to container 18 (figure 1). The user optionally displaces container 18 to some extent so that wheel axle 20 is aligned above lift fork 14. The user then activates electric winch 24, whereby lift fork 14 moves upward. Hook 16 of fork 14 extends here round wheel axle 20 and the container moves clear of the ground (figure 2). Hook 28 is then placed round pivot shaft 30 of cover 32. The container is now firmly attached. The user can if desired place the container at a slightly higher or lower position by operating the winch 24. The user then drives his/her car 8 to its destination. There the user moves the container downward by operating the winch 24. The container can optionally be tilted by uncoupling hook 28 when the container is situated at a height above the ground.

In the shown embodiment lift fork 14 is displaced by displacing second frame 12 relative to first frame 10. In an alternative embodiment the lifting device comprises a single frame along which a lift fork is movable. For this purpose the frame comprises for instance a guide for guiding this lift fork therealong.

The present invention is by no means limited to the above described preferred embodiments thereof. The rights sought are defined by the following claims, within the scope of which many modifications can be envisaged. In the case of an electric winch and/or electric motor an additional battery is for instance provided.

## Claims

1. Towing hook lift for lifting a mobile container comprising at least one wheel axle, the towing hook lift comprising:
- a frame provided with a first coupling means for coupling the frame to the towing hook of a vehicle; and
- a lifting device connected to the frame,
wherein the lifting device comprises a lifting means which is movable between a lowest position and a highest position and is provided with an engaging means for engaging the wheel axle of the mobile container for the purpose of lifting the container.

2. Towing hook lift as claimed in claim 1, wherein the lifting device comprises a second coupling means for coupling an upper part of the mobile container to the lifting device, wherein the second coupling means is movable such that the movement of the second coupling means is related to the movement of the lifting means.

3. Towing hook lift as claimed in claim 2, wherein the second coupling means comprises a resilient element.

4. Towing hook lift as claimed in claim 2 or 3, wherein the second coupling means is configured to engage on a pivot shaft of a cover provided on the upper side of the container.

5. Towing hook lift as claimed in any of the claims 1-4, wherein the lifting means comprises an adjusting mechanism for adjusting the width of the lift fork in a direction parallel to the wheel axle.

6. Towing hook lift as claimed in claim 5, wherein the lifting means comprises a first and a second fork element located at a mutual distance adjustable by the adjusting mechanism.

7. Towing hook lift as claimed in any of the claims 1-6, wherein the lifting means is length-adjustable.

8. Towing hook lift as claimed in any of the claims 1-7, further comprising a tilting mechanism.

9. Towing hook lift as claimed in any of the claims 1-8, wherein the lifting device comprises a vertical screw spindle which is rotatable by means of an electrical drive, and the lifting means comprises an opening which is provided with screw thread and through which opening the vertical screw spindle runs such that rotation of the vertical screw spindle displaces the lifting means along the vertical screw spindle.

10. Towing hook lift as claimed in any of the claims 1-9, wherein the frame is provided with a handgrip for the purpose of carrying the towing hook lift.

11. Assembly comprising a towing hook lift as claimed in one or more of the claims 1-10, and a platform and/or cycle carrier part which can be coupled to the lifting means.

12. Assembly comprising a towing hook lift as claimed in any of the claims 1-10 and a vehicle registration plate holder for attaching to the container.

13. Assembly comprising a towing hook lift as claimed in any of the claims 1-10 and a coupling piece which can be coupled to the towing hook of a vehicle, wherein the first coupling means of the frame of the towing hook lift can be coupled to the coupling piece for the purpose of coupling the frame via the coupling piece to the towing hook.

14. Method for lifting a mobile container comprising at least one wheel axle, the method comprising of providing a towing hook lift as claimed in any of the claims 1-10.
